**Europäisches Patentamt**

**European Patent Office**

**Office européen des brevets**

(19)

(11) Veröffentlichungsnummer: **0 218 264 B1**

(12) # EUROPÄISCHE PATENTSCHRIFT

(45) Veröffentlichungstag der Patentschrift: **15.04.92**

(51) Int. Cl.⁵: **G11B 23/113**

(21) Anmeldenummer: **86114092.9**

(22) Anmeldetag: **10.10.86**

(54) **Pneumatische Vorrichtung zum Bandspannen in einer Maschine zum Beladen von Magnetband auf Kassette.**

(30) Priorität: **11.10.85 IT 2245185**

(43) Veröffentlichungstag der Anmeldung:
**15.04.87 Patentblatt 87/16**

(45) Bekanntmachung des Hinweises auf die
Patenterteilung:
**15.04.92 Patentblatt 92/16**

(84) Benannte Vertragsstaaten:
**AT BE CH DE ES FR GB LI**

(56) Entgegenhaltungen:
**WO-A-82/00026**
**US-A- 4 497 454**
**US-A- 4 531 689**

(73) Patentinhaber: **ROBOTECNICA S.r.l.**
**Via Clerici, 2/4**
**20099 Sesto San Giovani (MI)(IT)**

(72) Erfinder: **Bosco, Angelo**
**Via Kennedy 27**
**I-20097 San Donato Milanese(IT)**
Erfinder: **Magnaghi, Edgardo**
**Via Veneto 11/3b San Bovio**
**I-20068 Peschiera Borromeo(IT)**

(74) Vertreter: **Vogl, Leo, Dipl.-Ing.**
**AEG Aktiengesellschaft Patent-und Lizenz-**
**wesen Theodor-Stern-Kai 1**
**W-6000 Frankturt am Main 70(DE)**

## Beschreibung

Die vorliegende Erfindung bezieht sich auf eine Pneumatische Bandspannvorrichtung in einer Maschine zum Laden von Magnetband in eine Kassette, wobei die Bandspannvorrichtung zwischen einer Spule, von der das Band abgewickelt wird, und zwei Bearbeitungsstationen zum Beladen der Kassetten angeordnet ist und den Bearbeitungsstationen abwechselnd das Band zugeführt wird, mit einem geschlossenen Behälter, in dessen Inneren ein Unterdruck erzeugt wird und in den das von der Spule kommende Band durch einen Schlitz ein und austritt, mit gebogenen Elementen am geschlossenen Behälter zur Führung und Rückführung des Bandes am Ein- und Ausgang des Behälters.

Es ist bekannt, daß bei diesen Maschinen eine Spule benutzt wird, auf die das Magnetband in mehrfacher Länge des auf eine Kassette zu ladenden Bandes aufgespult ist. Dieses auf die Spulen fortlaufend aufgewickelte Band kann schon, z.B. mit einem Musikprogramm, in der Weise bespielt sein (oder auch nicht), daß sich das Programm so oft zyklisch wiederholt, wie die Anzahl der zu beladenen Kassetten beträgt. Von dieser Spule wird das fortlaufende Band abgespult, um einer Ladestation für Kassetten zugeführt zu werden, wobei zwischen Spule und Ladestation gebräuchlicherweise eine pneumatische Bandspannungsvorrichtung vorgesehen ist. Von dieser Bandspannungsvorrichtung ist der Ladestation das Band mit konstanter Spannung und ohne Vibrationen zuzuführen, damit die korrekte und ungestörte Abwicklung der Arbeitsabläufe in besagter Ladestation garantiert ist. Diese Bandspannungsvorrichtung besteht im wesentlichen aus einem geschlossenen Behälter, in dessen Inneren ein Unterdruck erzeugt wird, und in den das Band, das von der Spule kommt, durch einen Schlitz unter Bildung einer Schleife ein- und austritt. Die Vorrichtung verfügt außerdem über gebogene Elemente zur Führung und Rückführung des Bandes in Zugehörigkeit zum Ein- und Ausgang des Behälters. In den Ladestationen der Kassetten werden, außer dem Aufwickeln der Portion des Bandes, das für eine Kassette bestimmt ist, verschiedene vorangehende und nachfolgende Operationen ausgeführt, die den Experten wohlbekannt sind. Daraus resultiert, daß die Gesamtzeit, die jede Kassette in der Ladestation verbringt, erhöht durch die Zeit, die zur Auswechslung der Kassetten notwendig ist, die für die Ladeoperation erforderlich e Zeit bei weitem überschreitet.

Zum Zwecke der besseren Ausnutzung einer solchen Maschine bis zur doppelten Produktivität wurde schon vorgeschlagen, (siehe US-Patent 4.332.355) in dieser Maschine zwei Arbeitsstationen so vorzusehen, daß man gleichzeitig zwei Kassetten bearbeiten kann. Wenn z. B. in einer der Stationen die vorangehenden und nachfolgenden Operationen ablaufen, inbegriffen die Auswechslung der gerade geladenen Kassette durch eine leere, in der anderen Station sich gleichzeitig der Arbeitsablauf des Aufspulens an einer anderen Kassette vollzieht.

Da das ankommende Band exakt auf die Station, an der das Aufspulen vorgenommen wird, ausgerichtet sein muß, und da, wie schon gesagt, in einer Maschine des oben genannten Typs mit zwei Arbeitsstationen der Aufspulvorgang alternierend in den beiden Stationen abläuft, wird eine Verschiebung des ankommenden Bandes notwendig, um es jedesmal auf die jeweilige Station auszurichten. Diese Verschiebung des ankommenden Bandes wurde gemäß der bekannten Technik dadurch bewerkstelligt, daß man zwischen dem Ausgang der pneumatischen Bandspannvorrichtung und den Arbeitsstationen der Maschine eine geeignete Bandführgabel setzte, die zwei Positionen einnehmen kann, von denen die eine Ausrichtung mit einer Station und die andere Ausrichtung mit der zweiten Station bedeutet. Die Verschiebung der besagten Gabel geschieht in senkrechter Richtung zur Laufrichtung des Bandes, das durch die Gabel läuft.

Man konnte feststellen, daß diese Art der Ausrichtung des ankommenden Bandes alternierend zu den beiden Arbeitsstationen verschiedene Nachteile mit sich bringt. Infolge des Umweges, den das Band durch die Teile der Bandführungsgabel nehmen muß, werden auf einem relativ kurzen Abschnitt zwischen Ausgang aus der pneumatischen Bandspannvorrichtung und den Arbeitsstationen, im Band selbst - das mit gleichförmiger, ziemlich hoher Geschwindigkeit läuft - starke und unzulässige Vibrationen induziert, die den korrekten Ablauf des Aufspulvorganges beeinträchtigen. Man sieht also, daß schon das Passieren einer Führungsgabel schädliche Vibrationen im Band selbst erzeugen kann, sodaß es von Vorteil ist, wenn das Band direkt vom Ausgang der pneumatischen Bandspannvorrichtung in einem möglichst kurzen Wegstück die Bearbeitungsstation erreicht, ohne daß das Band mit anderen Teilen in Kontakt kommt.

Aufgabe der vorliegenden Erfindung ist, das Problem der notwendigen Ausrichtung des ankommenden Bandes alternierend zu der einen und der anderen der zwei Arbeitsstationen, die für eine Maschine für das Laden von Magnetbändern auf Kassette vorgesehen sind, zu lösen, ohne daß sich die oben angegebenen Nachteile zeigen.

Zur Lösung dieses Problems wird vorgeschlagen, das diesbezügliche gebogene Element zur Führung und Rückführung des Bandes in Korrespondenz mit seinem Austritt auf einem gemeinsamen Träger anzubringen, und den Träger frei drehbar zu montieren und Mittel vorzusehen, um den Träger winklig zu verschwenken, alternierend in die eine oder andere zweier Stellungen, in denen das gebogene Element zur Führung oder Rückführung des Bandes in Korrespondenz mit dem Ausgang des Behälters auf eine oder die andere der zwei Bearbeitungsstationen ausgerichtet ist, um das Band direkt der einen oder anderen Station zuzuführen. Auf diese Weise wird für die Positionsänderung des ankommenden Bandes in den Bearbeitungsstationen dadurch gesorgt, daß man die Ebene desselben

Bandes leicht dreht, anstatt das Band auf derselben Ebene zu verschieben. In der Tat ergibt sich auf diese Weise kein Umweg des Bandlaufs, sondern man hat einfach nur eine leichte Verdrehung, die auch über eine größere Länge verteilt werden kann, und die daher zu keinen fühlbaren Störungen führt.

Die Erfindung als Ausführung dieser Idee sieht daher eine pneumatische Bandspannvorrichtung in einer Maschine für das Laden von Magnetbändern auf Kassette mit zwei Arbeitsstationen vor, die einen geschlossenen Behälter aufweist, in dem ein Unterdruck herrscht und in den das Band unter Bildung einer Schleife durch einen Spalt ein- und austritt, sowie gebogene Elemente zur Führung und Rückführung des Bandes in Zugehörigkeit zum Ein- und Ausgang des Behälters aufweist, dadurch gekennzeichnet, daß besagter Behälter und das diesbezügliche gebogene Element zur Führung und Rückführung des Bandes in Korrespondenz mit seinem Ausgang auf einen gemeinsamen Träger freischwingend montiert sind, und daß Mittel vorgesehen sind, um auf Befehl besagtem Träger winklig alternierend in eine oder andere der zwei Positionen zu verschieben, in der das gebogene Element zur Führung und Rückführung in Korrespondenz mit dem Ausgang des Behälters bezüglich der einen oder der anderen der zwei Arbeitsstationen ausgerichtet ist, um das Band direkt in die richtige Station einzuspeisen.

Die Erfindung wird im folgenden mit Bezug auf die beigelegten Zeichnungen detailliert beschrieben:

Abb. 1     zeigt schematisch eine bekannte Anlage,

Abb. 2     zeigt analog dazu eine Seitenansicht einer Anlage gemäß der Erfindung.

Abb. 3     zeigt von Vorne die pneumatische Spannvorrichtung gemäß dem Pfeil III aus Abb. 2

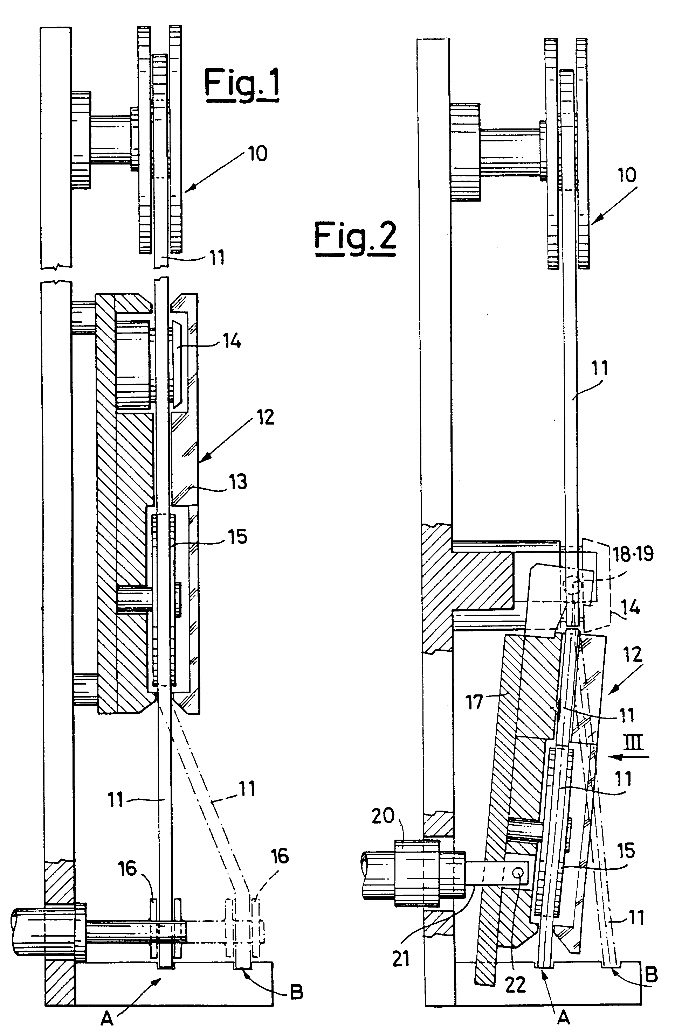

Betrachten wir zunächst die in Abb. 1 gezeigte bekannte Anlage, sohat sie im wesentlichen eine Spule 10, von der sich ein Band 11 abspult, das bei einer bekannten pneumatischen Bandspannvorrichtung 12 zugeführt wird. Diese Vorrichtung 12 umfaßt einen Behälter 13, der im wesentlichen geschlossen ist und in dem ein Unterdruck erzeugt wird, der die Schleife des Bandes 11 in Spannung hält. Das Band tritt in den Behälter über ein festes Rad 14 ein und aus dem Behälter über eine freilaufende Rolle 15 aus.

Von der freilaufenden Rolle 15 läuft das Band 11 durch eine Bandführungsgabel 16 und von dieser aus erreicht es die erste Bearbeitungsstation A. Um das von dem freilaufenden Rad 15 der Vorrichtung 12 ankommende Band auf die zweite Arbeitsstation B auszurichten, wird, bei der festsitzenden Vorrichtung 12, gemäß der bekannten Anlage, die Bandführungsgabel in die durch punktierte und gestrichelte Linien angezeigte Position verschoben, wodurch das Band 11 eine Krümmung in seiner Ebene erfährt. Dadurch erleidet das Band, das zur Bearbeitungsstation läuft, starke Vibrationen, auch im Hinblick auf die hohe Geschwindigkeit mit der das Band in der Ladephase einer Kassette läuft.

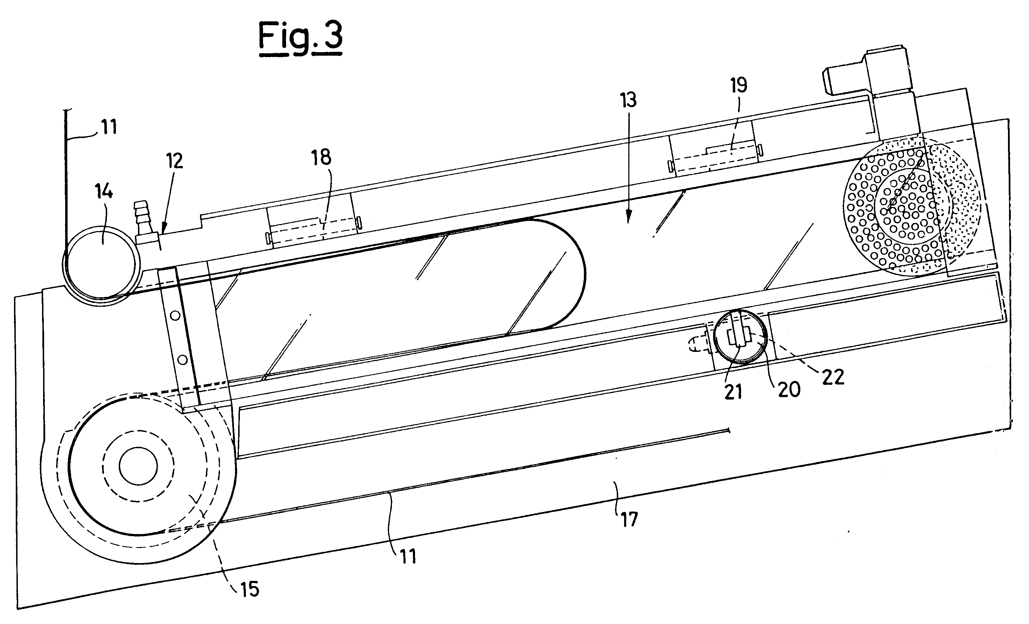

In den Abb. 2 und 3 ist eine Anlage gemäß der Erfindung dargestellt. Die Anlage besteht aus der Spule 10, von der das Band 11 abgespult wird, die Bandspannvorrichtung 12 und die Bearbeitungsstationen A und B, während die Bandführungsgabel der bekannten Anlage fehlt, durch die das Band 11 von der Vorrichtung 12 direkt in die Bearbeitungsstationen A oder B eingespeist wird.

Demgegenüber ist, um das Band 11, das aus der Vorrichtung 12 austritt, einmal nach der Station A und ein anderes mal nach der Station B ausrichten zu können, gem. der Erfindung vorgesehen, auf eine gemeinsame Trägerplatte 17 den Behälter 13 und das Element zur Führung und Rückführung 15 für das aus dem Behälter 13 der Bandspannvorrichtung 12 austretende Band zu montieren und mittels Scharniere 18, 19 diese Trägerplatte 17 auf einem festen Teil des Gehäuses freischwingend aufzuhängen, um eine begrenzte Schwenkung der Trägerplatte zwischen zwei extremen Stellungen zu ermöglichen. In einer der Stellungen ist das Element zur Führung und Rückführung 15 nach der Bearbeitungsstation A und in der anderen Stellung nach der Bearbeitungsstation B ausgerichtet. In der Praxis bedeutet besagte Schwenkung der freibeweglichen Gruppe eine begrenzte Drehung der Ebene des Bandes 11, aber keine Krümmung oder Verschiebung des Bandes auf seiner Ebene, die Drehung oder Verdrehung des Bandes verteilt sich auf eine größere Länge des Bandes, so daß keine fühlbaren Vibrationen und Störungen entstehen können. Die Drehung der Trägerplatte 17 mit ihren darauf angebrachten Teilen, kann durch einen pneumatischen Zylinder 20 oder ähnliches Element erzeugt werden. Der Kolben des Zylinders 20 ist durch ein Gelenk 22 mit der Platte 17 verbunden. Natürlich können anstatt eines Zylinders mit Kolben auch andere Mittel verwendet werden, z. B. mechanische, elektromagnetische usw.

## Patentansprüche

1. Pneumatische Bandspannvorrichtung (12) in einer Maschine zum Laden von Magnetband (11) in eine Kassette, wobei die Bandspannvorrichtung (12) zwischen einer Spule (10), von der das Band (11) abgewickelt wird, und zwei Bearbeitungsstationen (A, B) zum Beladen der Kassetten angeordnet ist und den Bearbeitungsstationen (A, B) abwechselnd das Band (11) zugeführt wird, mit einem geschlossenen Behälter (13), in dessen Inneren ein Unterdruck erzeugt wird und in den das von der Spule (10) kommende Band (11) durch einen Schlitz ein und austritt, mit gebogenen Elementen (14, 15) am geschlossenen Behälter (13) zur Führung und Rückführung des Bandes (11) am Ein- und Ausgang des Behälters (13) dadurch gekennzeichnet, daß das diesbezügliche gebogene Element (15) zur Führung und Rückführung des Bandes (11) in Korrespondenz mit seinem Austritt auf einem gemeinsamen Träger (17) angebracht sind, und der Träger (17) frei drehbar montiert ist und daß Mittel (20) vorgesehen sind, um den Träger winklig zu verschwenken, alternierend in die eine oder andere zweier Stellungen (A, B), in denen das gebogene Element (15) zur Führung oder Rückführung des Bandes (11) in Korrespondenz mit dem Ausgang des Behälters (13) auf eine oder die andere der zwei Bearbeitungsstationen (A, B) ausgerichtet ist, um das Band (11) direkt der einen oder anderen Station zuzuführen.

2. Vorrichtung gemäß Anspruch 1, dadurch gekennzeichnet, daß die Mittel zum winkligen Verschieben des Trägers (17) aus einem linearen Schieber (21) bestehen.

3. Vorrichtung gemäß Anspruch 1 oder 2, dadurch gekennzeichnet, daß der lineare Schieber (21) aus einem Zylinderkolben (20) besteht.

## Claims

1. Pneumatic tape tensioning device (12) in a machine for the loading of magnetic tape (11) into a cassette, wherein the tape tensioning device (12) is arranged between a spool (10), from which the tape (11) is unwound, and two processing stations (A, B) for the loading of the cassette and the tape (11) is fed to the processing stations (A, B) in alternation, with a closed container (13), in the interior of which an underpressure is generated and in which the tape (11) coming from the spool (10) enters and exits through a slot, with curved elements (14, 15) at the closed container (13) for the guiding forward and back of the tape (11) at the inlet and outlet of the container (13), characterised thereby that the relevant curved elements (15) for the guiding forward and back of the tape (11) are disposed, in correspondence with its outlet, on a common carrier (17), and the carrier (17) is mounted to be freely rotatable, and that means (20) are provided in order to angularly pivot the carrier alternatingly into the one or other of two settings (A, B), in which the curved element (15) for the guiding forward and back of the tape (11) is aligned, in correspondence with the outlet of the container (13), with one or the other of the two processing stations (A, B) in order to feed the tape (11) directly to the one or other station.

2. Device according to claim 1, characterized thereby that the means for the angular displacing of the carrier (17) consists of a linear slide (21).

3. Device according to claim 1, characterised thereby that the linear slide (21) consists of a cylinder-piston (20).

## Revendications

1. Dispositif tendeur de bande pneumatique (12) utilisé dans une machine destinée à charger une bande magnétique (11) dans une cassette, le dispositif tendeur de bande (12) étant agencé entre une bobine (10) d'où la bande (11) se déroule et deux postes de travail (A, B) qui chargent les cassettes, et la bande (11) étant amenée aux postes de travail (A, B) en alternance, ce dispositif comprenant un récipient fermé (13) dans le volume intérieur duquel on engendre une dépression, et dans lequel la bande (11) arrivant de la bobine (10) pénètre à travers une fente, et d'où elle sort à travers cette fente, le dispositif comprenant des éléments courbes (14, 15) portés par le récipient fermé (13) et qui servent à guider et à renvoyer la bande (11) à l'entrée et à la sortie du récipient (13), caractérisé en ce que l'élément courbe correspondant (15) servant à guider et à renvoyer la bande au droit de sa sortie est monté sur un support commun (17) et le support (17) est monté librement oscillant, et il est prévu des moyens (20) pour faire osciller angulairement le support, pour le placer alternativement dans l'une et dans l'autre de deux positions (A, B) dans lesquelles l'élément courbe (15) est orienté pour guider ou renvoyer la bande (11), au droit de la sortie du récipient (13), sur l'un ou sur l'autre des deux postes de travail (A, B), de manière à acheminer directement la bande à l'un ou à l'autre des postes.

2.  Dispositif selon la revendication 1, caractérisé en ce que les moyens utilisés pour le déplacement angulaire du support (17) sont constitués par un poussoir linéaire (21).

3.  Dispositif selon la revendication 1 ou 2, caractérisé en ce que le poussoir linéaire (21) est constitué par un groupe cylindre-piston (20).

Fig.1

Fig.2

Fig.3